# EUROPÄISCHE PATENTANMELDUNG

(11) **EP 3 091 165 A1**
(43) Veröffentlichungstag der Anmeldung: **09.11.2016**
(21) Anmeldenummer: 16165305.0
(22) Anmeldetag: 14.04.2016
(51) Int. Cl.: E06B 3/66, E06B 3/72, E06B 3/54

(54) **BAUELEMENT FÜR EINE GEBÄUDEÖFFNUNG MIT EINEM INTEGRIERTEN PHOTOVOLTAIK-ELEMENT**

(30) Priorität: 07.05.2015 DE 102015006068
(71) Anmelder: SIEGENIA-AUBI KG, 57234 Wilnsdorf (DE)
(72) Erfinder: FRANK, Wieland, 57234 Wilnsdorf (DE)

(57) **Zusammenfassung**

Die Erfindung betrifft ein Bauelement umfassend einen Rahmen, der ein Füllelement (1) mit einer Innenscheibe (2) und einer Außenscheibe (3) aufnimmt, die über ein wärmeisolierendes Verbindungselement (4) verbunden sind. Um das Bauelement weiterzuentwickeln ist die Anordnung mindestens eines Photovoltaik-Elementes (10', 10") an dem Verbindungselement (4) und/oder an der dem Verbindungselement (4) abgewandten Innenseite der Außenscheibe (3) vorgesehen.

## Beschreibung

Die Erfindung betrifft ein Bauelement nach dem Oberbegriff des Anspruchs 1. Das Bauelement ist Teil eines Öffnungsverschlusses einer Gebäudeöffnung. Derartige Bauelemente sind bereits bekannt.

Aus der EP 2034119 A2 ist eine Tür mit flügelüberdeckender Füllung bekannt, bei der die Füllung nicht transparent ist und zwei unterschiedlich groß bemessene, voneinander beabstandete Platten für eine Innen- und eine Außenplatte vorsieht. Die Innenplatte liegt wie gewohnt etwas beabstandet von einem Glasfalz und ist einer Glasleiste mit einer Dichtung zugeordnet, während die Außenplatte eine fest mit dem Profil verbundene Außenglasleiste übergreift und die Profilaußenfläche überdeckt. Die Außenplatte kommt bei geschlossenem Flügel mit einer Dichtung des Blendrahmens in Kontakt.

Die DE 2711888 B2 offenbart eine Stufenscheibe, bei der die transparente Innenscheibe kleiner bemessen ist als die Außenscheibe. Die Außenscheibe ist im dem Bereich eines Scheibenabstandshalters und dem die Innenscheibe überragenden Abschnitt mit einer Strahlungsschutzschicht versehen die innenseitig aufgebracht ist, um vor Witterungseinflüssen geschützt zu sein und die undurchsichtig ist. Damit wird ein Teil des Flügelrahmens außenseitig abgedeckt und bleibt wartungsfrei, die empfindlichen Klebstoffverbindungen des Scheibenabstandshalters und der Außenscheibe bleiben UV-Stahlungsgeschützt.

Ausgehend vom genannten Stand der Technik besteht der Wunsch, das Bauelement, welches als Fenster oder Tür gestaltet sein kann, funktionell weiterzuentwickeln.

Die Erfindung sieht dazu die Anordnung mindestens eines Photovoltaik-Elementes an dem Verbindungselement und/oder der dem Verbindungselement abgewandten Innenseite der Außenscheibe vor, so dass die ohnehin nicht Licht durchlassenden Flächen zur Stromerzeugung verwendet werden können. Damit gestaltet sich ein Bauelement Energieautark und kann ohne Verdrahtungsaufwand zusätzliche Funktionen erfüllen.

Eine Weiterbildung sieht vor, dass das Photovoltaik-Element dem Verbindungselement zugeordnet ist, welches dazu als vorgefertigtes Bauteil nur mit der Innen- und der Außenscheibe verbunden werden muss.

Um die der Witterung ausgesetzten Flächen in optisch vorteilhafter Weise zu schützen, ist vorgesehen, dass die Außenscheibe die Innenscheibe umlaufend um ein Maß überragt, welches der Rahmenabmessung in gleicher Richtung entspricht. Die äußeren Flächen bestehen dadurch aus wartungsfreiem Glas.

Eine Weiterbildung sieht dazu vor, dass der Rahmen ein Flügelrahmen ist, der mit der Außenscheibe an einer Dichtung eines gebäudefesten Blendrahmens anschlägt.

Zur Maximierung der Fläche des Photovoltaik-Elementes ist vorgesehen, dass das Photovoltaik-Element innenseitig auf der Außenscheibe im Bereich des die Innenscheibe überragenden Randes angeordnet ist. Damit ist neben der aktiven Nutzung der Fläche eine optische Abdeckung und ein UV-Schutz gewährleistet.

Zum, Anschluss und zur Verbindung des Photovoltaik-Elementes mit Verbrauchern ist vorgesehen, dass der zwischen der Innen- und der Außenscheibe angeordnete Scheibenabstandshalter elektrische Leiter beinhaltet, so dass eine zusätzliche Verkabelung entfällt.

Weitere vorteilhafte Ausgestaltungen ergeben sich aus den Zeichnungen. Es zeigt:
Fig. 1 eine Seitenansicht eines Füllelementes in einem Schnitt, und
Fig. 2 einen Schnitt durch ein Flügel und Rahmenprofil eines Bauelementes.

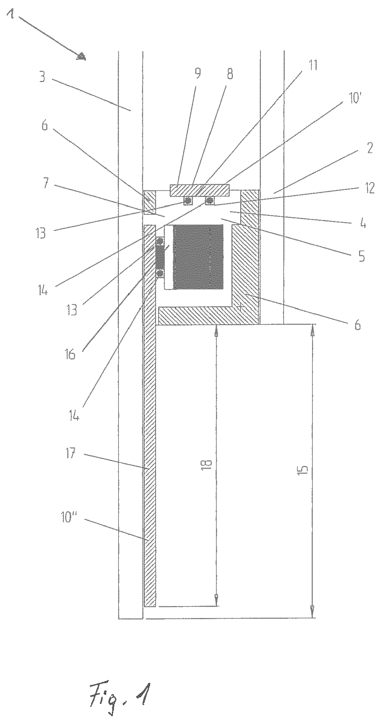

In der Fig. 1 ist von einem Bauelement nur ein Füllelement 1 dargestellt, welches aus einer Innenscheibe 2, einer Außenscheibe 3 und einem zwischen diesen liegendem Verbindungselement 4 in Form eines Scheibenabstandshalters 5 besteht. Die Innenscheibe 2 und der Scheibenabstandshalter 5 sind über einen Klebstoff 6 gasdicht verbunden. Der Scheibenabstandshalter 5 ist im Wesentlichen T-förmig und weist einen senkrecht zur Innen- und Außenscheibe 2,3 verlaufenden Steg 7 auf. Dieser bildet im Ausführungsbeispiel einen geschlossenen Rahmen durch das umlaufende Verbindungselement 4 und trägt an den aufeinander zuweisenden Auflageflächen ein Paneel 8, welches in einer offenen Nut 9 einsitzt. Das Paneel 8 ist ein Photovoltaik-Element 10', welches zur Erzeugung von Strom Sonnenlicht benötigt. In dem Steg 7 sind zwei offene Nuten 11, 12 zur Aufnahme von elektrischen Leitern 13, 14 angebracht. Die Nut 9 ermöglich eine genaue Relativlagenzuordnung des Paneels 8 relativ zu dem aus Kunststoff extrudierten Scheibenabstandshalter 5, so dass an dem Paneel 8 angebrachte Klemmkontakte mit den aus Stäben bestehenden Leitern 13, 14 elektrisch gekoppelt werden können.

In dem Ausführungsbeispiel nach Fig. 1 ist das Füllelement 1 mit einer Außenscheibe 3 versehen, welche die Innenscheibe 2 um ein Maß 15 überragt. Entlang der Außenscheibe 3 ist diese mit dem Scheibenabstandshalter 5 über dem Klebstoff 6 verbunden. Eine von der Außenscheibe 3 zurückspringende Wand 16 bleibt von der Außenscheibe 3 beabstandet, so dass darin ein Paneel 17 entlang der Wand 16 und dem überragenden Schenkel 18 Platz findet. Auch dieses Paneel 17 ist als Photovoltaik-Element 10" ausgelegt und dient der Strombereitstellung. Dazu ist das Photovoltaik-Element 10" (Paneel 17) auf der dem Rahmen abgewandten Seite der Außenscheibe 3 angebracht und liegt mit der Sonneneinfallsschicht unmittelbar an der Außenscheibe 3 an. Auch für dieses Photovoltaik-Element 10" sind in dem Scheibenabstandhalter 5 elektrische Leiter 13, 14 vorgesehen. Die Außenscheibe 3 überdeckt im üblichen Anwendungsfall den Flügelrahmen eines Fensters oder einer Tür und wirkt analog zur DE 20102936 U1 oder der EP 2034119 A2 mit einer Rahmendichtung zusammen.

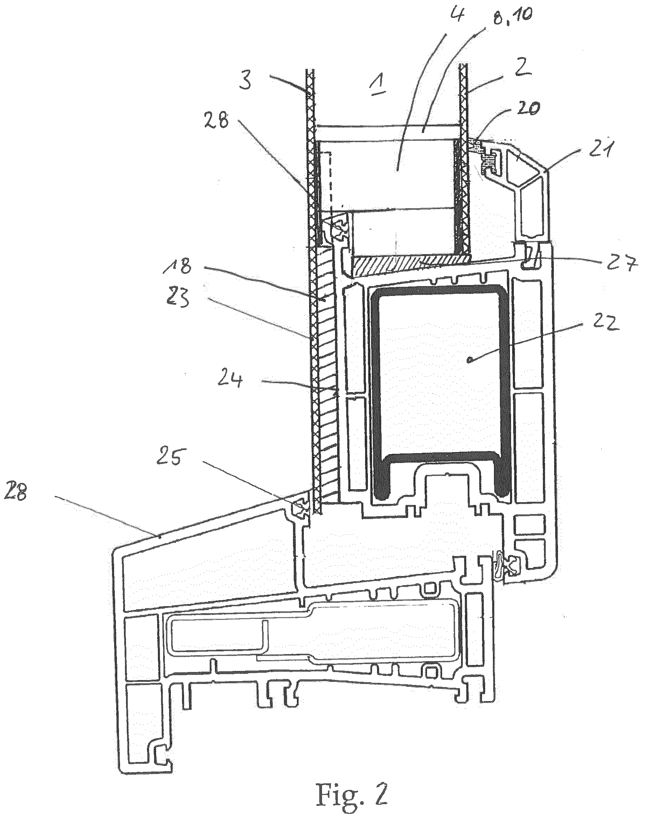

Einen solchen Aufbau zeigt auch die Fig. 2. Hierbei ist vorgesehen, dass das Füllelement 1 mit einer Innenscheibe 2 an der Dichtung 20 einer Glasleiste 21 eines aus Flügelholmen zusammengesetzten Flügels 22 anliegt. Der in der Fig. 2 dargestellte Flügel 22 bildet einen umlaufenden Rahmen für das Füllelement 1. Die Außenscheibe 3 überragt die Innenscheibe umlaufend um das in Fig. 1 angegebene Maß 15 mit einem Schenkel 23 und ragt so über die gebäudeaußenseitige Flügelsichtfläche 24, wobei das Maß 15 annähernd der Rahmenabmessung in gleicher Richtung entspricht. Eine im Rahmen 28 angeordnete Rahmendichtung 25 schlägt an die Außenscheibe 3 bei geschlossenem Flügel 22 an. Das Verbindungselement 4 ist hier nur vereinfacht dargestellt und stützt das Füllelement 1 gegen den Glasfalz 26 über einen Klotz 27 ab. An der dem Verbindungselement 4 abgewandten Innenseite des verlängerten Schenkels 23 der Außenscheibe 3 ist ein Photovoltaik-Element 10" angebracht. Dieses ist mit dem Klebstoff 6 befestigt, der auch das Verbindungselement 4 mit der Innen- und der Außenscheibe 2, 3 verbindet.

Abweichend kann auch vorgesehen werden, dass das Photovoltaikelement 10", wie in der Fig. 1 dargestellt, bis auf den Rand des Verbindungselementes 4 vorragt, was in der Fig. 2 gestrichelt dargestellt ist. Diese Ausgestaltung erlaubt eine direkte Anbindung des Photovoltaikelementes 10" an die Leiter 13, 14 im vertikalen Schenkel des Verbindungselementes 4.

Die in der Fig. 2 dargestellte Anordnung, erlaubt die Anordnung des durch die Außenscheibe 3 geschützten Photovoltaik-Elementes 10" in einem, ohnehin nicht lichtdurchlässigen Bereich des Bauelements und schützt zudem das Bauelement vor Verwitterung.

Abweichend von der Darstellung nach den Figuren kann auch vorgesehen werden, dass der Steg 7 in Richtung der Gebäudeaußenseite abfallend geneigt ist.

### Bezugszeichenliste

- 1: Füllelement
- 2: Innenscheibe
- 3: Außenscheibe
- 4: Verbindungselement
- 5: Scheibenabstandshalter
- 6: Klebstoff
- 7: Steg
- 8: Paneel
- 9: Nut
- 10': Photovoltaik-Element
- 10": Photovoltaik-Element
- 11: Nut
- 12: Nut
- 13: Leiter
- 14: Leiter
- 15: Maß
- 16: Wand
- 17: Paneel
- 18: Schenkel
- 19:
- 20: Dichtung
- 21: Glasleiste
- 22: Flügel
- 23: Schenkel
- 24: Flügelsichtfläche
- 25: Rahmendichtung
- 26: Glasfalz
- 27: Klotz
- 28: Rahmen

## Patentansprüche

1. Bauelement umfassend einen Rahmen, der ein Füllelement (1) mit einer Innenscheibe (2) und einer Außenscheibe (3) aufnimmt, die über ein wärmeisolierendes Verbindungselement (4) verbunden sind,
**gekennzeichnet durch** die Anordnung mindestens eines Photovoltaik-Elementes (10', 10") an dem Verbindungselement (4) und/oder an der dem Verbindungselement (4) abgewandten Innenseite der Außenscheibe (3).

2. Bauelement nach Anspruch 1,
**dadurch gekennzeichnet,**
**dass** das Photovoltaik-Element (10') dem Verbindungselement (4) zugeordnet ist.

3. Bauelement nach Anspruch 2,
**dadurch gekennzeichnet,**
**dass** der Rahmen ein Flügelrahmen ist, der mit der Außenscheibe an einer Dichtung eines gebäudefesten Blendrahmens anschlägt.

4. Bauelement nach Anspruch 3,
**dadurch gekennzeichnet,**
**dass** die Außenscheibe (3) die Innenscheibe (2) umlaufend um ein Maß überragt, welches der Rahmenabmessung in gleicher Richtung entspricht.

5. Bauelement nach Anspruch 3 oder 4,
**dadurch gekennzeichnet,**
**dass** das Photovoltaik-Element (10") innenseitig auf der Außenscheibe (3) im Bereich des die Innenscheibe (2) überragenden Randes angeordnet ist.

6. Bauelement nach einem der Ansprüche 1 bis 5,
dass das zwischen der Innen- und der Außenscheibe (2,3) angeordnete Verbindungselement (4) ein Scheibenabstandshalter (5) mit elektrischen Leitern (13,14) ist.
